# EUROPEAN PATENT APPLICATION

(11) **EP 4 621 106 A1**
(43) Date of publication of application: **24.09.2025**
(21) Application number: 23891316.4
(22) Date of filing: 26.10.2023
(51) Int. Cl.: C25B 15/00, C25B 1/04, C25B 3/03, C25B 3/25, C25B 9/00

(54) **ELECTROLYSIS SYSTEM AND ELECTROLYSIS DEVICE**

(30) Priority: 18.11.2022 JP 2022185160
(71) Applicant: ENEOS Corporation, Chiyoda-ku Tokyo 100-8162 (JP)
(72) Inventor: MISU, Yoshitatsu, Tokyo 100-8162 (JP); SHIMOYAMA, Yuto, Tokyo 100-8162 (JP); TAKANO, Kaori, Tokyo 100-8162 (JP); MATSUOKA, Koji, Tokyo 100-8162 (JP)
(74) Representative: Algemeen Octrooi- en Merkenbureau B.V.
(86) International application number: PCT/JP2023/038664
(87) International publication number: WO 2024/106161

(57) **Abstract**

An electrolysis system (1) includes: an electrolysis cell (2); and a mediator reduction tank (4). The electrolysis cell (2) has: an anode electrode (10) that electrochemically oxidizes a reduced form (MRed) of a mediator; and a cathode electrode (8) that performs at least one of generation of hydrogen by electrochemical reduction of protons or water and generation of an organic hydride by electrochemical reduction of a hydrogenation target substance. The mediator reduction tank (4) non-photochemically reduces an oxidized form (MOx) of the mediator generated in the electrolysis cell (2).

## Description

### TECHNICAL FIELD

The present invention relates to an electrolysis system and an electrolysis method.

### BACKGROUND ART

In recent years, in order to suppress the carbon dioxide emission amount in the energy generation process, renewable energy is expected to be used, which is obtained by solar light, wind power, hydraulic power, geothermal power generation, and the like. As an example, an electrolysis system for generating hydrogen by performing water electrolysis using power derived from renewable energy has been devised (see, for example, Patent Literature 1).

In addition, organic hydrides have attracted attention as an energy carrier for large-scale transportation and storage of hydrogen derived from renewable energy. With regard to a technology for generating an organic hydride, electrolysis systems are known that generate protons from water at an anode electrode and generates an organic hydride by hydrogenating a hydrogenation target substance at a cathode electrode.

### RELATED-ART LITERATURE

### PATENT LITERATURE

Patent Literature 1: JP 2018-165392
Patent Literature 2: JP 2021-098872
Patent Literature 3: JP 2017-178640
Patent Literature 4: JP 2015-509650 (published Japanese translation of PCT international publication for patent application)

### SUMMARY OF INVENTION

### TECHNICAL PROBLEM

The present inventors have made intensive study on the above-stated electrolysis systems and found out that there is room for further improving the safety of related-art electrolysis systems.

The present invention has been made in view of such a situation, and an object thereof is to improve the safety of electrolysis systems.

### SOLUTION TO PROBLEM

One embodiment of the present invention relates to an electrolysis system. This electrolysis system includes: an electrolysis cell; and a mediator reduction tank that is connected to the electrolysis cell. The electrolysis cell has: an anode electrode that electrochemically oxidizes a reduced form of a mediator; and a cathode electrode that performs at least one of the generation of hydrogen by electrochemical reduction of protons or water and generation of an organic hydride by electrochemical reduction of a hydrogenation target substance. The mediator reduction tank non-photochemically reduces the oxidized form of the mediator generated in the electrolysis cell.

Another embodiment of the present invention relates to an electrolysis method in which an electrolysis system is used that includes an electrolysis cell and a mediator reduction tank that is connected to the electrolysis cell. This electrolysis method includes: generating an oxidized form of the mediator by electrochemically oxidizing a reduced form of the mediator at an anode electrode of the electrolysis cell; performing at least one of generation of hydrogen by electrochemically reducing protons or water and generation of an organic hydride by electrochemically reducing a hydrogenation target substance at a cathode electrode of the electrolysis cell; and generating the reduced form by non-photochemically reducing the oxidized form generated in the electrolysis cell in the mediator reduction tank.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present invention, it is possible to improve the safety of electrolysis systems.

### BRIEF DESCRIPTION OF DRAWINGS

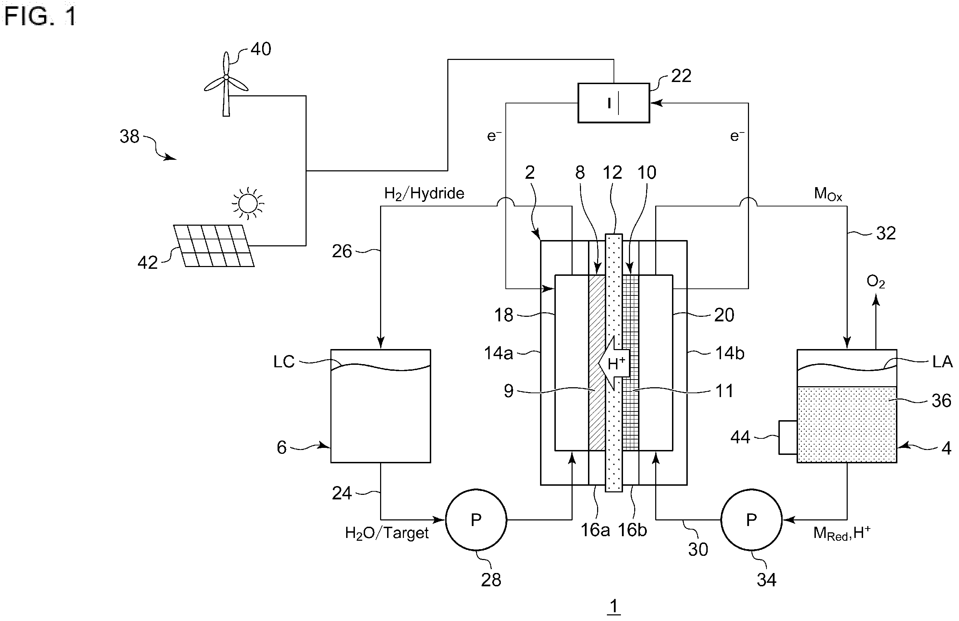

[Fig. 1] Fig. 1 is a schematic diagram of an electrolysis system according to an embodiment.

### DESCRIPTION OF EMBODIMENTS

Hereinafter, the present invention will be described based on preferred embodiments with reference to the drawings. The embodiments do not limit the technical scope of the present invention and are shown for illustrative purposes, and not all the features described in the embodiments and combinations thereof are necessarily essential to the invention. Therefore, regarding the details of the embodiments, many design modifications such as change, addition, deletion, etc., of the constituent elements may be made without departing from the spirit of the invention defined in the claims. New embodiments resulting from added design change will provide the advantages of the embodiments and variations that are combined. In the embodiments, the details for which such design change is possible are emphasized with the notations "according to the present embodiment," "in the present embodiment," etc. However, design change is also allowed for those without such notations. Optional combinations of the constituting elements described in the embodiments are also valid as embodiments of the present invention. The same or equivalent constituting elements, members, and processes illustrated in each drawing shall be denoted by the same reference numerals, and duplicative explanations will be omitted appropriately. The scales and shapes of parts shown in each figure are set for the sake of convenience in order to facilitate the explanation and shall not be interpreted in a limited manner unless otherwise mentioned. Terms like "first," "second," etc., used in the specification and claims do not indicate an order or importance by any means and are used to distinguish a certain feature from the others. Some of the components in each figure may be omitted if they are not important for explanation.

Fig. 1 is a schematic diagram of an electrolysis system 1 according to an embodiment. As an example, the electrolysis system 1 includes an electrolysis cell 2, a mediator reduction tank 4, and a catholyte tank 6. Although only one electrolysis cell 2 is illustrated in Fig. 1, the electrolysis system 1 may include a plurality of electrolysis cells 2. In this case, the electrolysis cells 2 are oriented and stacked such that the cathode electrode 8 and the anode electrode 10 are arranged in the same direction, for example, and are electrically connected in series. Note that the electrolysis cells 2 may be connected in parallel or may be a combination of series connection and parallel connection. Further, the configuration of the electrolysis system 1 is not limited to those described below, and the configuration of each part can be changed as appropriate.

The electrolysis cell 2 has a cathode electrode 8 (cathode), an anode electrode 10 (anode), and an electrolyte membrane 12. The cathode electrode 8 performs at least one of the generation of hydrogen by electrochemical reduction of protons or water and the generation of an organic hydride by electrochemical reduction of the hydrogenation target substance. "Electrochemical" in the present embodiment means that a reaction proceeds when a voltage is applied from outside the electrolysis cell 2 or a current is superimposed. The cathode electrode 8 has a cathode catalyst 9 that generates at least one of hydrogen and an organic hydride. As an example, the cathode electrode 8 is provided with a cathode catalyst layer including the cathode catalyst 9.

When hydrogen is produced by electrochemical reduction of protons or water, a known catalyst such as platinum (Pt) can be used for the cathode catalyst 9. When an organic hydride is produced by electrochemical reduction of the hydrogenation target substance, a known catalyst such as platinum or ruthenium (Ru) can be used for the cathode catalyst 9. Both hydrogen and an organic hydride can be produced in one electrolysis cell 2. For example, a possible operating mode is to generate hydrogen during the day when hydrogen demand is high and generate an organic hydride while storing hydrogen at night when hydrogen demand is low. In the cathode catalyst layer, the cathode catalyst 9 can be supported by a porous catalyst support. The catalyst support includes an electron-conductive material such as porous carbon, a porous metal, or a porous metal oxide. Further, the cathode catalyst 9 preferably has a deterioration resistance to a mediator in consideration of the possibility that the mediator passes through the electrolyte membrane 12. Further, it is preferable that the cathode catalyst 9 is less likely to adsorb the mediator. It is also preferable that the cathode catalyst 9 is less likely to cause the mediator to be deposited.

When the cathode electrode 8 produces an organic hydride, if the electrolyte membrane 12 has proton conductivity, the cathode catalyst 9 is coated with a cation-exchange ionomer. For example, the catalyst support which is in the state of supporting the cathode catalyst 9 is coated with an ionomer. Examples of the cation-exchange ionomer include perfluorosulfonic acid polymers such as Nafion (registered trademark), Flemion (registered trademark), Aquivion (registered trademark), or Aciplex (registered trademark), and hydrocarbon-based sulfonic acid polymers. It is preferable that the cathode catalyst 9 is partially coated with the ionomer. As a result, it is possible to efficiently supply three elements (the hydrogenation target substance, a proton, and an electron) necessary for an electrochemical reaction in the cathode electrode 8 to the reaction field.

When the cathode electrode 8 produces an organic hydride, if the electrolyte membrane 12 has anion conductivity, the cathode catalyst 9 is coated with an anion-exchange ionomer. For example, the catalyst support, which is in the state of supporting the cathode catalyst 9, is coated with an ionomer. Examples of the anion-exchange ionomer include polymers such as Fumion (registered trademark). It is preferable that the cathode catalyst 9 is partially coated with the ionomer. As a result, it is possible to efficiently supply three elements (the hydrogenation target substance, water, and an electron) necessary for an electrochemical reaction in the cathode electrode 8 to the reaction field.

The cathode electrode 8 may be provided with a cathode diffusion layer. As an example, the cathode catalyst layer is arranged so as to be in contact with one of the main surfaces of the electrolyte membrane 12. The cathode diffusion layer is arranged so as to be in contact with the main surface on the side opposite to the electrolyte membrane 12 in the cathode catalyst layer. The cathode diffusion layer includes a conductive material such as carbon or a metal. In addition, the cathode diffusion layer is a porous body such as a sintered body of fibers or particles or a foamed molded body. Examples of the material included in the cathode diffusion layer include a carbon woven fabric (carbon cloth), a carbon nonwoven fabric, carbon paper, and the like. Note that the cathode diffusion layer may be omitted.

The anode electrode 10 electrochemically oxidizes a reduced form M_{Red} of the mediator. The anode electrode 10 has an anode catalyst 11 that oxidizes the reduced form M_{Red} of the mediator to produce an oxidized form Mₒₓ of the mediator and electrons. As an example, the anode electrode 10 is provided with an anode catalyst layer including the anode catalyst 11. For the anode catalyst 11, a known porous body having conductivity can be used. As specific examples of the anode catalyst 11, carbon porous bodies such as carbon paper and carbon felt, metal porous bodies such as foamed metals, and a three-dimensional structure composed of a mixture of conductive particles and a binder can be used. The anode catalyst 11 may have a structure in which a substance having catalytic action is supported on a porous body having or not having catalytic action.

The anode catalyst 11 only needs to have activity for the oxidation reaction of the reduced form M_{Red}, and does not need to have activity for the oxygen evolution reaction (OER). For this reason, depending on the mediator that is used, an inexpensive electrode such as carbon can be used as the anode catalyst 11. The anode catalyst 11 preferably has durability at the redox potential of the mediator. Further, the anode catalyst 11 may not cause a redox reaction in the range of 0 to 2.5 V vs. RHE at the pH of the solution containing the mediator. Further, the anode catalyst 11 preferably does not undergo phase change in the range of 0.1 to 2.3 V vs. RHE, and more preferably does not undergo phase change in the range of 0.2 to 2.0 V vs. RHE.

The mediator is preferably liquid or solid at normal temperature and pressure. The "normal temperature and pressure" in the present embodiment is, for example, 20°C and 1 atm. When the mediator is solid at normal temperature and pressure, the mediator is preferably used in a state of being dissolved in a solvent such as water, for example, in an anolyte LA described later. By using a liquid mediator or a solution containing a solid mediator at normal temperature and pressure, the mediator can be easily supplied to the anode electrode 10. Further, the mediator can be easily reacted at the anode electrode 10. In addition, compared to the gaseous mediator at normal temperature and pressure, the type of mediator that can be selected can be increased.

Further, there are two types of mediators: inorganic and organic substances. The inorganic substances are mainly ionic salts, and, as an example, ions react as mediators in a state of being dissolved in a solvent. The organic substances themselves react as mediators. The organic substances include organometallic compounds. The inorganic substances tend to be more durable than the organic substances. In particular, the inorganic substances have high stability in an oxidation atmosphere. On the other hand, since the structure of the organic substances can be easily changed compared to the inorganic substances, it is easier to adjust the physical properties of the organic substances such as electric potential and solubility compared to an inorganic substance.

Further, in consideration of the possibility that the mediator moves to the cathode electrode 8 via the electrolyte membrane 12, it is preferable that the mediator is unlikely to be deposited at the hydrogen generation potential at the cathode electrode 8. Further, it is preferable that the mediator is less likely to permeate through the electrolyte membrane 12. Further, the mediator preferably does not undergo phase change in the range of -0.5 to 2.5 V vs. RHE, more preferably does not undergo phase change in the range of -0.4 to 2.3 V vs. RHE, even more preferably does not undergo phase change in the range of -0.3 to 2.0 V vs. RHE in the pH of the solution containing the mediator.

Preferably, the mediator is composed of a redox couple having an electrode potential that is more noble than an electrode potential at which oxygen is generated at the anode electrode 10 at the operating temperature of the electrolysis cell 2. Examples of such a redox couple includes a pair of an oxidized form and a reduced form of at least one substance selected from the group consisting of silver (Ag), manganese (Mn), cerium (Ce), cobalt (Co), chromium (Cr), halogen, halogen oxoacid, nickel (Ni), peroxodisulfuric acid, thallium (Tl), and selenic acid. Further, by causing these substances to form appropriate complexes, the redox potential of the mediator can be adjusted. The mediator may exist in a dissolved or dispersed state in the anolyte LA described later. The standard electrode potential of oxygen generation at the anode electrode 10 at the operating temperature of the electrolysis cell 2 can be calculated based on the Nernst equation.

Further, when an aqueous solution containing the mediator is used, the electrode potential of the mediator aqueous solution is preferably 1.12 V vs. RHE or more, and more preferably 1.48 V vs. RHE or more. The theoretical reaction potential in the oxygen evolution reaction is 1.12 V vs. RHE at 150°C. The thermal neural potential is 1.48 V vs. RHE. The "thermal neutral potential" means an electric potential at which heat absorption and heat generation do not occur at the time of a reaction at that potential.

The higher the temperature, the smaller the oxygen evolution reaction, in other words, the theoretical reaction potential of a mediator reduction reaction; however, considering the boiling point of water and the like, it is assumed that the oxygen evolution reaction proceeds at 150°C or less in the mediator reduction tank 4. In this case, when the electrode potential of the mediator aqueous solution is lower than 1.12 V vs. RHE, it becomes difficult for the oxygen evolution reaction to proceed spontaneously in the mediator reduction tank 4. For this reason, it is desirable that the electrode potential of the mediator aqueous solution is 1.12 V vs. RHE or more. Further, when the electrode potential of the mediator aqueous solution is 1.48 V vs. RHE, which is a thermal neutral potential, or more, an external heat supply to the mediator reduction tank 4 can be omitted. Thereby, the reaction rate of the oxygen evolution reaction occurring in the mediator reduction tank 4 can be easily increased.

Further, the electrode potential of the mediator aqueous solution is preferably 2.5 V vs. RHE or less, and more preferably 2.0 V vs. RHE or less. At the anode electrode 10, a heat generation loss occurs that corresponds to: (mediator potential - thermal neutral potential) × current. For this reason, the lower the potential of the mediator, the less energy loss during the reaction. In practice, from the viewpoint of the balance between the calorific value and the cooling cost of the electrolysis cell 2, in other words, from the viewpoint of energy efficiency and electrode degradation, the electrode potential of the mediator aqueous solution is preferably 2.5 V vs. RHE or less. Further, when the electrode potential of the mediator aqueous solution is 2.0 V vs. RHE or less, an energy efficiency can be more easily obtained that is comparable to that in existing water electrolysis and organic hydride production.

The anode electrode 10 may be provided with an anode diffusion layer. As an example, the anode catalyst layer is arranged so as to be in contact with the other main surface of the electrolyte membrane 12. The anode diffusion layer is arranged so as to be in contact with the main surface on the side opposite to the electrolyte membrane 12 in the anode catalyst layer. The anode diffusion layer may have a structure similar to that of the cathode diffusion layer.

The electrolyte membrane 12 is arranged between the cathode electrode 8 and the anode electrode 10. As an example, the electrolyte membrane 12 has protonic conductivity. In this case, the electrolyte membrane 12 moves protons from the anode electrode 10 to the cathode electrode 8. As an example, the electrolyte membrane 12 is composed of a solid polymer electrolyte membrane (PEM) having protonic conductivity. Examples of PEM include a fluorinated ion exchange membrane having a sulfonic acid group such as Nafion (registered trademark) and a hydrocarbon ion exchange membrane such as Fumasep, for example. Fig. 1 illustrates the electrolyte membrane 12 having proton conductivity. However, this feature is not particularly limiting, and the electrolyte membrane 12 may have anion conductivity. In this case, the electrolyte membrane 12 moves hydroxide ions from the cathode electrode 8 to the anode electrode 10. As an example, the electrolyte membrane 12 is composed of a solid polymer electrolyte membrane (AEM) having anion conductivity. Examples of AEM include known anion exchange membranes such as Fumasep (registered trademark), Pention, and Sustainion (registered trademark). The electrolyte membrane 12 is preferably difficult for the mediator to permeate.

As an example, a membrane electrode assembly composed of the cathode electrode 8, the anode electrode 10, and the electrolyte membrane 12 is sandwiched between a plate member 14a and a plate member 14b. The plate members 14a and 14b are composed of, for example, a metal such as stainless steel or titanium. The plate member 14a is stacked on the membrane electrode assembly from the side of the cathode electrode 8. The plate member 14b is stacked on the membrane electrode assembly from the side of the anode electrode 10. A gap between the plate member 14a and the membrane electrode assembly is sealed with a gasket 16a. A gap between the plate member 14b and the membrane electrode assembly is sealed with a gasket 16b. When the electrolysis system 1 includes only one electrolysis cell 2, a pair of plate members 14a and 14b can correspond to so-called end plates. When the electrolysis system 1 includes a plurality of electrolysis cells 2 and other electrolysis cells 2 are lined up next to the plate member 14a or the plate member 14b, the plate member can correspond to a so-called separator.

A cathode flow path 18 is connected to the cathode electrode 8. The cathode flow path 18 feeds and discharges a catholyte LC to and from the cathode electrode 8. A groove may be provided on a main surface facing the cathode electrode 8 side in the plate member 14a, and this groove may constitute the cathode flow path 18. When the cathode electrode 8 produces hydrogen, the catholyte LC is, for example, water. When the cathode electrode 8 produces an organic hydride, the catholyte LC contains a hydrogenation target substance that is an organic hydride raw material. As an example, the catholyte LC does not contain an organic hydride before the start of the operation of the electrolysis system 1, and after the start of the operation, the organic hydride generated by electrolysis is mixed in, whereby the catholyte becomes the liquid mixture of the hydrogenation target substance and the organic hydride. The hydrogenation target substance and the organic hydride are preferably a liquid at 20°C and 1 atm.

The hydrogenation target substance and the organic hydride are not particularly limited as long as they are organic compounds capable of adding/desorbing hydrogen by reversibly causing a hydrogenation reaction/dehydrogenation reaction. As the hydrogenation target substance and the organic hydride used in the present embodiment, an acetone-isopropanol type, a benzoquinone-hydroquinone type, an aromatic hydrocarbon type, and the like can be widely used. Among these, the aromatic hydrocarbon type is preferable from the viewpoint of transportability during energy transport or the like. In general, aromatic hydrocarbon-based hydrogenation target substances and organic hydrides are hydrophobic.

An aromatic hydrocarbon compound used as the hydrogenation target substance is a compound containing at least one aromatic ring. Examples of the aromatic hydrocarbon compound include benzene, alkylbenzene, naphthalene, alkylnaphthalene, anthracene, and diphenylethane. The alkylbenzene contains a compound in which 1 to 4 hydrogen atoms in the aromatic ring are substituted with a linear alkyl group or a branched alkyl group having 1 to 6 carbons. Examples of such a compound include toluene, xylene, mesitylene, ethylbenzene, and diethylbenzene. The alkylnaphthalene contains a compound in which 1 to 4 hydrogen atoms in the aromatic ring are substituted with a linear alkyl group or a branched alkyl group having 1 to 6 carbons. Examples of such a compound include methylnaphthalene. These compounds may be used alone or in combination.

The hydrogenation target substance is preferably at least one of toluene and benzene. It is also possible to use a nitrogen-containing heterocyclic aromatic compound such as quinoline, isoquinoline, N-alkylpyrrole, N-alkylindole, or N-alkyldibenzopyrrole as the hydrogenation target substance. The organic hydride is obtained by hydrogenating the above-described hydrogenation target substance, and examples thereof include cyclohexane, methylcyclohexane, dimethylcyclohexane, and decahydroquinoline.

The anode flow path 20 is connected to the anode electrode 10. The anode flow path 20 feeds and discharges the anolyte LA to and from the anode electrode 10. A groove may be provided on a main surface facing the anode electrode 10 side in the plate member 14b, and this groove may constitute the anode flow path 20. The anolyte LA that is applied to the anode electrode 10 contains a reduced form M_{Red} of the mediator. The anolyte LA that is discharged from the anode electrode 10 contains an oxidized form Mₒₓ of the mediator. Further, the anolyte LA supplied to the anode electrode 10 also contains protons when the electrolyte membrane 12 is composed of PEM. Further, the anolyte LA discharged from the anode electrode 10 also contains hydroxide ions when the electrolyte membrane 12 is composed of AEM.

The electrolysis cell 2 is supplied with power from a power source 22. The supply of power from the power source 22 causes a predetermined electrolytic voltage to be applied between the cathode electrode 8 and the anode electrode 10, and an electrolytic current thus flows. The power source 22 sends the power supplied from an external power supply device 38 to the electrolysis cell 2. The power supply device 38 can be constituted by a power generation device that generates power using renewable energy, for example, a wind power generation device 40, a solar power generation device 42, or the like. In this case, the power source 22 supplies power derived from the renewable energy to the electrolysis cell 2. The power supply device 38 is not limited to a renewable energy power generation device, and may be a system power supply, a power storage device storing electric power from the renewable energy power generation device or the system power supply, or the like. A combination of two or more of these devices may be used.

The reaction that occurs when hydrogen is produced in the electrolysis cell 2 provided with PEM is as follows. In the following reaction, a redox pair of Mn²⁺/Mn³⁺ is shown as an example of the mediator.

<Electrode Reaction in Anode Electrode> 2Mn²⁺ → 2Mn³⁺ + 2e⁻

<Electrode Reaction in Cathode Electrode> 2H⁺+2e⁻ → H₂

That is, the electrode reaction in the anode electrode 10 and the electrode reaction in the cathode electrode 8 proceed in parallel. At the anode electrode 10, an oxidation reaction of the reduced form M_{Red} contained in the anolyte LA occurs, and the oxidized form M_{Ox} and electrons are generated. That is, the anode electrode 10 oxidizes the reduced form M_{Red} by a reaction that does not involve gas generation. In the present embodiment, "oxidation of the reduced form M_{Red} by a reaction that does not involve gas generation" means that there is no gas generation in the main reaction for oxidizing the reduced form M_{Red} and includes a case where a side reaction involving gas generation occurs upon the oxidation of the reduced form M_{Red}. The generated electrons are sent to the cathode electrode 8 via the power source 22. The oxidized form M_{Ox} is discharged from the anode flow path 20 to the outside of the electrolysis cell 2. Further, the protons in the anolyte LA move from the anode electrode 10 to the cathode electrode 8 via the electrolyte membrane 12. In the cathode electrode 8, hydrogen gas is generated by the reaction of electrons and protons moving from the anode electrode 10 side. The generated hydrogen gas is discharged from the cathode flow path 18 to the outside of the electrolysis cell 2.

The reaction that occurs when an organic hydride is generated in the electrolysis cell 2 provided with PEM is as follows. In the following reaction, a redox pair of Mn²⁺/Mn³⁺ is shown as an example of the mediator, and toluene (TL) is shown as an example of the hydrogenation target substance. The organic hydride obtained in a case where toluene is used as the hydrogenation target substance is methylcyclohexane (MCH).

<Electrode Reaction in Anode Electrode> 6Mn²⁺ → 6Mn³⁺ + 6e⁻

<Electrode Reaction in Cathode Electrode> TL + 6H⁺ + 6e⁻ → MCH

That is, the electrode reaction in the anode electrode 10 and the electrode reaction in the cathode electrode 8 proceed in parallel. At the anode electrode 10, an oxidation reaction of the reduced form M_{Red} contained in the anolyte LA occurs, and the oxidized form M_{Ox} and electrons are generated. The generated electrons are sent to the cathode electrode 8 via the power source 22. The oxidized form M_{Ox} is discharged from the anode flow path 20 to the outside of the electrolysis cell 2. Further, the protons in the anolyte LA move from the anode electrode 10 to the cathode electrode 8 via the electrolyte membrane 12. In the cathode electrode 8, toluene is hydrogenated to produce methylcyclohexane by the reaction between the toluene contained in the catholyte LC and the protons transferred from the anode electrode 10 side. The generated methylcyclohexane is discharged from the cathode flow path 18 to the outside of the electrolysis cell 2.

The reaction that occurs when hydrogen is produced in the electrolysis cell 2 provided with AEM is as follows. In the following reaction, a redox pair of Mn²⁺/Mn³⁺ is shown as an example of the mediator.

<Electrode Reaction in Anode Electrode> Mn²⁺ → Mn³⁺ + e⁻

<Electrode Reaction in Cathode Electrode> H₂O + e⁻ → 1/2H₂ + OH⁻

That is, the electrode reaction in the cathode electrode 8 and the electrode reaction in the anode electrode 10 proceed in parallel. At the cathode electrode 8, a reduction reaction of water contained in the catholyte LC occurs, and hydrogen gas and hydroxide ions are generated. The generated hydrogen gas is discharged from the cathode flow path 18 to the outside of the electrolysis cell 2. The generated hydroxide ions move from the cathode electrode 8 to the anode electrode 10 via the electrolyte membrane 12 and are further discharged from the anode flow path 20 to the outside of the electrolysis cell 2. At the anode electrode 10, the oxidized form M_{Ox} and electrons are generated due to a reaction of the reduced form M_{Red} contained in the anolyte LA. The generated electrons are sent to the cathode electrode 8 via the power source 22. The oxidized form M_{Ox} is discharged from the anode flow path 20 to the outside of the electrolysis cell 2.

The reaction that occurs when an organic hydride is generated in the electrolysis cell 2 provided with AEM is as follows. In the following reaction, a redox pair of Mn²⁺/Mn³⁺ is shown as an example of the mediator, and toluene (TL) is shown as an example of the hydrogenation target substance.

<Electrode Reaction in Anode Electrode> 6Mn²⁺ → 6Mn³⁺ + 6e⁻

<Electrode Reaction in Cathode Electrode> TL + 6H₂O + 6e⁻ → MCH + 6OH⁻

That is, the electrode reaction in the cathode electrode 8 and the electrode reaction in the anode electrode 10 proceed in parallel. At the cathode electrode 8, a reduction reaction of toluene contained in the catholyte LC occurs, and methylcyclohexane and hydroxide ions are generated. The water that is used for the electrode reaction at the cathode electrode 8 is provided from water entering from the anode electrode 10 side via the electrolyte membrane 12, for example. The generated methylcyclohexane is discharged from the cathode flow path 18 to the outside of the electrolysis cell 2. The generated hydroxide ions move from the cathode electrode 8 to the anode electrode 10 via the electrolyte membrane 12 and are further discharged from the anode flow path 20 to the outside of the electrolysis cell 2. At the anode electrode 10, the oxidized form M_{Ox} and electrons are generated due to a reaction of the reduced form M_{Red} contained in the anolyte LA. The generated electrons are sent to the cathode electrode 8 via the power source 22. The oxidized form M_{Ox} is discharged from the anode flow path 20 to the outside of the electrolysis cell 2.

The catholyte tank 6 is connected to the cathode flow path 18 via the first cathode pipe 24 and the second cathode pipe 26. The catholyte LC is stored in the catholyte tank 6. One end of the first cathode pipe 24 is connected to the catholyte tank 6, and the other end of the first cathode pipe 24 is connected to the entrance of the cathode flow path 18. The cathode pump 28 is provided in the middle of the first cathode pipe 24. The cathode pump 28 can be constituted by a known pump such as a gear pump or a cylinder pump, for example. The distribution of the catholyte LC may be realized by a liquid feeding device other than a pump. One end of the second cathode pipe 26 is connected to the exit of the cathode flow path 18, and the other end of the second cathode pipe 26 is connected to the catholyte tank 6.

The catholyte LC in the catholyte tank 6 flows into the cathode electrode 8 through the first cathode pipe 24 by driving of the cathode pump 28. The catholyte LC in the cathode electrode 8 returns to the catholyte tank 6 through the second cathode pipe 26. When hydrogen is generated at the cathode electrode 8, the hydrogen gas generated flows into the catholyte tank 6 along with the catholyte LC. The catholyte tank 6 also functions as a gas-liquid separator and separates the hydrogen gas in the catholyte LC from the catholyte LC. The separated hydrogen gas is taken out of the system and used. Hydrogen gas may be generated by a side reaction when an organic hydride is generated at the cathode electrode 8. In this case as well, hydrogen gas is separated from the catholyte LC in the catholyte tank 6 and taken out of the system. A gas-liquid separator may be provided separately from the catholyte tank 6.

In the present embodiment, the catholyte LC is circulated between the cathode electrode 8 and the catholyte tank 6. However, the present invention is not limited to this configuration, and the catholyte LC may be sent to the outside of the system from the cathode electrode 8 without being returned to the catholyte tank 6. Further, when hydrogen is generated at the cathode electrode 8 of the electrolysis cell 2 provided with PEM, the supply of the catholyte LC to the cathode electrode 8 can be omitted. Therefore, the catholyte tank 6, the first cathode pipe 24, the cathode pump 28, and the like related to the supply of the catholyte LC can also be omitted.

The mediator reduction tank 4 is connected to the anode flow path 20 via the first anode pipe 30 and the second anode pipe 32. Therefore, the electrolysis cell 2 and the mediator reduction tank 4 are physically separated from each other. In the present embodiment, "physically separated" means that the electrolysis cell 2 itself or the housing of the electrolysis cell 2 and the tank wall of the mediator reduction tank 4 are separated, that is, they are not in direct contact, and there may be a space between the two, or some substance or structure may be interposed. The anolyte LA is stored in the mediator reduction tank 4. When the electrolyte membrane 12 is composed of PEM, the anode electrode 10 is preferably placed under an acidic condition in consideration of an oxidation reaction of the reduced form M_{Red} occurring at the anode electrode 10. Therefore, the anolyte LA is preferably acidic. When the electrolyte membrane 12 is composed of AEM, the anolyte LA is preferably alkaline. When a redox pair Mn²⁺/Mn³⁺ is used as a mediator, the anolyte LA as an example is a sulfuric acid aqueous solution containing Mn²⁺/Mn³⁺. On the cathode side, hydrogen and an organic hydride, which are the target products, are directly generated instead of the redox reaction of the mediator. Therefore, the cathode electrode 8 can be also subjected to a non-acidic condition.

One end of the first anode pipe 30 is connected to the mediator reduction tank 4, and the other end of the first anode pipe 30 is connected to the entrance of the anode flow path 20. An anode pump 34 is provided in the middle of the first anode pipe 30. The anode pump 34 can be constituted by a known pump such as a gear pump or a cylinder pump, for example. The distribution of the anolyte LA may be realized by a liquid feeding device other than a pump. One end of the second anode pipe 32 is connected to the exit of the anode flow path 20, and the other end of the second anode pipe 32 is connected to the mediator reduction tank 4.

The anolyte LA in the mediator reduction tank 4 flows into the anode electrode 10 through the first anode pipe 30 by driving of the anode pump 34. The anolyte LA in the anode electrode 10 is returned to the mediator reduction tank 4 through the second anode pipe 32. The oxidized form M_{Ox} generated at the anode electrode 10 is sent to the mediator reduction tank 4 in a state of being contained in the anolyte LA. When the electrolyte membrane 12 is composed of AEM, the hydroxide ions transferred from the cathode electrode 8 to the anode electrode 10 are also sent to the mediator reduction tank 4 in a state of being contained in the anolyte LA.

The mediator reduction tank 4 non-photochemically reduces the oxidized form MOx of the mediator generated in the electrolysis cell 2. By using a mediator that reacts non-photochemically, for example, it is possible to oxidize the mediator with electric power obtained from solar power generation during the day, and perform an OER reaction at night so as to reduce the mediator. Therefore, it is possible to construct a system that can effectively use solar power generation. "Non-photochemically" in the present embodiment means that the reaction proceeds without relying on a photocatalyst. Further, "photocatalyst" in the present embodiment refers to those that have the effect of promoting a chemical reaction of another substance using the energy of light as a driving force, that is, those that exert a catalytic effect with the energy of light. As an example, the mediator reduction tank 4 has a mediator reduction catalyst 36 that causes the oxidized form M_{Ox} to react with water or hydroxide ions so as to produce the reduced form M_{Red} and oxygen. Specific examples of the mediator reduction catalyst 36 include at least one oxide or compound selected from the group consisting of iridium (Ir), ruthenium, platinum (Pt), palladium (Pd), rhodium (Rh), nickel, cobalt, manganese, chromium, iron, and the like.

The OER catalyst used in the mediator reduction tank 4, that is, the mediator reduction catalyst 36, does not require conductivity unlike an OER catalyst used in the anode electrode where the oxygen evolution reaction occurs, that is, a conventional anode catalyst. For the OER catalyst used in an anode electrode, a highly active oxide such as a metal oxide has often been used. However, oxides tend to be less conductive. Therefore, it has been a challenge to ensure the conductivity of anode electrodes. On the other hand, since conductivity is not required for the OER catalyst used in the mediator reduction tank 4, the above-described trade-off can be avoided. The mediator reduction catalyst 36 is preferably stable in the atmosphere of the anolyte LA. Also, the mediator reduction catalyst 36 preferably has durability at the redox potential of the mediator. Depending on the type of the mediator, the reduced form M_{Red} may be converted to the oxidized form M_{Ox} by heating without using the mediator reduction catalyst 36.

In the mediator reduction tank 4, the oxidized form M_{Ox} reacts with water or hydroxide ions as shown in the following equation (non-electrochemical reaction and non-photochemical reaction).

<Reaction 1 in Mediator Reduction Tank> nH₂O + M_{Ox} → n/2O₂ + nH⁺ + M_{Red} (n is an integer of 1 or more)

<Reaction 2 in Mediator Reduction Tank> nOH⁻ + M_{Ox} → n/4O₂ + n/2H₂O + M_{Red} (n is an integer of 1 or more)

<Reaction 3 in Mediator Reduction Tank> H₂O + M_{Ox} → 1/2O₂ + M_{Red}

Reaction 1 is a reaction of an acid-based mediator in which n-valent redox occurs. The "acid-based mediator" in the present embodiment is a mediator composed of inorganic substances that become ions under an acidic condition of less than pH 7 among the above-described inorganic substances, and is mainly used when the electrolyte membrane 12 is composed of PEM. In Reaction 1, oxygen gas, protons, and electrons are generated from the water in the anolyte LA. The mediator reduction tank 4 also functions as a gas-liquid separator and separates the generated oxygen gas from the anolyte LA. The separated oxygen gas is taken out of the system. A gas-liquid separator may be provided separately from the mediator reduction tank 4. The electrons generated from the water are provided to the oxidized form M_{Ox} in the anolyte LA. Thereby, the oxidized form M_{Ox} is reduced so as to produce the reduced form M_{Red}.

Reaction 2 is a reaction of an alkaline-based mediator in which n-valent redox occurs. The "alkaline-based mediator" in the present embodiment is a mediator composed of inorganic substances that become ions under an alkaline condition of pH 7 or more among the above-described inorganic substances, and is mainly used when the electrolyte membrane 12 is composed of AEM. In Reaction 2, oxygen gas, water, and electrons are generated from hydroxide ions in the anolyte LA. The oxygen gas is separated from the anolyte LA in the mediator reduction tank 4. The electrons are provided to the oxidized form M_{Ox} so as to produce the reduced form M_{Red}.

Reaction 3 is a reaction of an organic mediator. The "organic mediator" in the present embodiment is a mediator composed of the above-described organic substances, and is mainly used when the electrolyte membrane 12 is composed of PEM. As an example, a reaction is shown that occurs when the mediator binds to two H⁺. In Reaction 3, oxygen gas, protons, and electrons are generated from the water in the anolyte LA. The oxygen gas is separated from the anolyte LA. The electrons and the protons are provided to the oxidized form M_{Ox} in the anolyte LA so as to produce the reduced form M_{Red}.

The reduced form M_{Red} generated in the mediator reduction tank 4 is sent to the anode electrode 10 in a state of being contained in the anolyte LA. The reduced form M_{Red} sent to the anode electrode 10 is subjected to a hydrogen or organic hydride generation reaction (electrochemical reaction) again. Further, in the case of Reaction 1 and Reaction 3, the protons generated in the mediator reduction tank 4 are also sent to the anode electrode 10 in a state of being contained in the anolyte LA. The protons sent to the anode electrode 10 move to the cathode electrode 8 via the electrolyte membrane 12 composed of PEM.

The protons are in an ionized state in the anolyte LA in Reaction 1, whereas the protons are in a state of being bound to the reduced form M_{Red} in Reaction 3. An example of a state in which the protons are bound to the reduced form M_{Red} is a state where protons are bound to each of two ketone groups of an anthraquinone derivative constituting an organic mediator so as to become an anthrahydroquinone derivative. If the protons are bound to the reduced form M_{Red}, the protons are released along with the oxidation of the reduced form M_{Red} and move to the cathode electrode 8 via the electrolyte membrane 12.

Preferably, the operating temperature of the mediator reduction tank 4 is adjusted to a temperature higher than the operating temperature of the electrolysis cell 2. For example, the electrolysis system 1 includes a known heater 44 that heats the mediator reduction tank 4. A heater for heating the electrolysis cell 2 may also be provided. The inside of the mediator reduction tank 4 is heated by the heater 44 and becomes hotter than the membrane electrode assembly of the electrolysis cell 2. The oxygen evolution reaction that occurs in the mediator reduction tank 4 proceeds more easily at high temperatures. For this reason, the mediator reduction tank 4 is desirably adjusted to have a temperature of 80°C or higher, for example. On the other hand, the electrolysis cell 2 is desirably adjusted to have a temperature lower than the preferred temperature in the mediator reduction tank 4 in consideration of the heat resistance of the electrolyte membrane 12 and the like.

On the other hand, in the electrolysis system 1 according to the present embodiment, the electrolysis cell 2 and the mediator reduction tank 4 are separated. For this reason, the temperature of the electrolysis cell 2 and the temperature of the mediator reduction tank 4 can be adjusted independently of each other. Therefore, the temperature of the mediator reduction tank 4 can be made higher than that of the electrolysis cell 2 to facilitate the progress of the oxygen evolution reaction in the mediator reduction tank 4. The heater 44 may heat the mediator reduction tank 4 using exhaust heat from a facility such as an oil refining plant. The mediator reduction tank 4 may not need to be heated. Thereby, the heater 44 can be omitted. Further, the energy required for heating the mediator reduction tank 4 can be reduced.

As described above, in the electrolysis system 1 according to the present embodiment, oxygen is not generated in the electrolysis cell 2, and oxygen is generated in the mediator reduction tank 4 provided separately from the electrolysis cell 2. For this reason, even when the electrolyte membrane 12 breaks, it is possible to prevent oxygen from being mixed into the hydrogen generated at the cathode electrode 8. Thereby, the safety of the electrolysis system 1 can be improved. Further, there is a greater degree of freedom in the selection of catalysts that can be used for the oxidation reaction of the reduced form M_{Red} compared to anode catalysts used in conventional water electrolysis and organic hydride production. For this reason, the cost of the electrolysis system 1 can be reduced.

Further, the reaction that occurs at the anode electrode 10 does not involve gas generation that significantly increases the volume. For this reason, the diameter of the manifold of the electrolysis cell 2 and the diameter of the pipes located downstream of the electrolysis cell 2 can be reduced. Therefore, the cost of the electrolysis system 1 can be significantly reduced. Further, there is no need to implement measures for the electrolysis cell 2 against pressure fluctuations caused by gas generation, or the strength required for the electrolysis cell 2 as such measures can be reduced. Therefore, the structure of the electrolysis cell 2 can be simplified. Therefore, the volume of the electrolysis cell 2 can be reduced, and the cost can be also reduced. Further, when the cathode electrode 8 generates an organic hydride, substantially no gas is generated at the cathode electrode 8. Thereby, the structure of the electrolysis cell 2 can be further simplified. Further, when the power source 22 supplies power derived from renewable energy having a large output fluctuation to the electrolysis cell 2, the fluctuation of the load on the electrolysis cell 2 tends to increase. On the other hand, by not generating gas at least at the anode electrode 10, the electrolysis cell 2 can be made more resistant to load fluctuations. Therefore, it is possible to omit the need to provide a leveling device such as a storage battery to stabilize the power supply.

Further, by not involving substantial gas generation at least at the anode electrode 10, the risk of physical damage to the electrolyte membrane 12 can be reduced. Furthermore, if oxygen is generated at the anode electrode, this oxygen may pass through the electrolyte membrane and move to the cathode electrode. Oxygen transferred to the cathode electrode is reduced at the cathode electrode so as to form oxygen radical species. The oxygen radical species can decompose the electrolyte membrane. Therefore, the electrolyte membrane can be chemically degraded. On the other hand, according to the electrolysis system 1 of the present embodiment, chemical deterioration of the electrolyte membrane 12 can also be suppressed. Therefore, the life of the electrolyte membrane 12 and even the life of the electrolysis cell 2 can be extended. Further, in conventional electrolysis cells, an expensive perfluorosulfonic acid-based electrolyte membrane with high durability against oxygen radical species is used in order to suppress the chemical deterioration of the electrolyte membrane. In addition, the thickness of the electrolyte membrane is increased. On the other hand, according to the electrolysis system 1 of the present embodiment, it is possible to adopt an inexpensive electrolyte membrane having low durability against oxygen radical species, such as a hydrocarbon membrane. Further, it is possible to make the electrolyte film thinner. Therefore, a significant cost reduction of the electrolysis cell 2 can be achieved.

Further, since the mediator reduction catalyst 36 is isolated from the electrolysis cell 2, the mediator reduction catalyst 36 can be easily replaced. Thereby, the maintainability of the electrolysis system 1 can be improved. Further, in conventional electrolysis cells, the deterioration of OER catalysts (anode catalysts) is dominant on the life of the electrolysis cells. On the other hand, in the present embodiment, since the OER catalyst (mediator reduction catalyst 36) is isolated from the electrolysis cell 2, the life of the electrolysis cell 2 can be extended.

Further, since the mediator reduction catalyst 36 is isolated from the electrolysis cell 2, the durability required for the mediator reduction catalyst 36 can be reduced. This allows the use of less durable but less expensive OER catalysts. In addition, since there is no longer any limitation on the filling volume due to the size of the electrolysis cell 2, a large amount of OER catalysts can be packed into the mediator reduction tank 4. Therefore, OER catalysts having a slow reaction rate can be also employed. That is, the degree of freedom of selection of the mediator reduction catalyst 36 is increased, and the cost of the electrolysis system 1 can be reduced.

Further, since the oxygen evolution reaction does not occur at the anode electrode 10, the anode electrode 10 is not limited by the polarization resistance of the oxygen evolution reaction, heat generation due to the polarization resistance, mass transfer resistance due to the generation of oxygen gas, pressure fluctuation, and the like. Therefore, it is possible to operate the electrolysis system 1 at a higher current density.

Further, in the anode electrode 10, the mediator is oxidized electrochemically instead of photochemically. When the mediator is photochemically reacted, it is necessary to supply three things: light; a catalyst; and a mediator, to the anode electrode 10. For this reason, it becomes necessary to make the anode chamber and the current collector translucent. Further, depending on the structure of the anode electrode 10, the anolyte LA containing the mediator also needs to have translucency. In addition, the amount of catalyst coating can be limited. Further, stacking of the electrolysis cell 2 becomes difficult, which can lead to a complication of the structure of the electrolysis cell 2 and an increase in cost. On the other hand, by electrochemically oxidizing the mediator, the above-described limitation can be avoided. Thereby, the structure of the anode electrode 10 and the structure of the electrolysis cell 2 can be simplified.

Further, a direct generation reaction of hydrogen and an organic hydride occurs instead of a redox reaction of the mediator at the cathode electrode 8. The hydrogen evolution reaction at the cathode electrode 8 involves an extremely small overvoltage. Further, a highly durable catalyst such as Pt can be used for the cathode electrode 8. Further, since the risk of hydrogen and oxygen being mixed when the electrolyte membrane 12 breaks can be suppressed by using a mediator in the reaction at the anode electrode 10, there is no reason to use a mediator even for the reaction at the cathode electrode 8. In addition, when an organic hydride is generated on the cathode side, it is extremely difficult to mix the catholyte LC and the mediator aqueous solution and bring the mixture into contact with the cathode catalyst 9. Alternatively, it may be necessary to incorporate a complex structure into the electrolysis system 1 in order to mix the catholyte LC and the mediator aqueous solution and bring the mixture into contact with the cathode catalyst 9. For these reasons, the direct generation of a target product at the cathode electrode 8 is employed in the present embodiment. Thereby, the structure of the electrolysis system 1 can be simplified, and the production efficiency of the target product can be improved.

Further, the mediator is reduced non-photochemically in the mediator reduction tank 4. When the mediator is photochemically reacted, it is necessary to supply three things, light, a catalyst, and a mediator, to the mediator reduction tank 4. For this reason, it may become necessary to make the mediator reduction tank 4 and the anolyte LA translucent. On the other hand, by reducing the mediator in a non-photochemical manner, the above-described limitation can be avoided. Thereby, the structure of the mediator reduction tank 4 can be simplified.

Further, in the case of an acid-based mediator or an organic mediator, a reaction occurs in which the reduced form M_{Red} and oxygen are generated from the oxidized form M_{Ox} of the mediator and water in the mediator reduction tank 4. In the case of an alkaline-based mediator, a reaction occurs in which the reduced form M_{Red} and oxygen are generated from water-derived hydroxide ions and oxidized form M_{Ox}. That is, the mediator can be reduced directly or indirectly using water, which is easily available at low cost. Further, the by-product produced by the reduction reaction of the mediator is oxygen, which can be discharged directly into the air. Thereby, it is possible to construct an inexpensive system from the viewpoint of procurement and processing of goods.

The embodiments may be defined by the items described in the following.

### [Item 1]

An electrolysis system (1) including:
an electrolysis cell (2); and
a mediator reduction tank (4) that is connected to the electrolysis cell (2), wherein
the electrolysis cell (2) has: an anode electrode (10) that electrochemically oxidizes a reduced form (M_{Red}) of a mediator; and a cathode electrode (8) that performs at least one of generation of hydrogen by electrochemical reduction of protons or water and generation of an organic hydride by electrochemical reduction of a hydrogenation target substance, and
the mediator reduction tank (4) non-photochemically reduces an oxidized form (M_{Ox}) of the mediator generated in the electrolysis cell (2).

### [Item 2]

The electrolysis system (1) according to Item 1, wherein
the mediator reduction tank (4) causes the oxidized form (M_{Ox}) to react with water or hydroxide ions so as to produce the reduced form (M_{Red}) and oxygen.

### [Item 3]

The electrolysis system (1) according to Item 1 or Item 2, wherein
the mediator is composed of a redox couple having an electrode potential that is more noble than an electrode potential at which oxygen is generated at the anode electrode (10) at the operating temperature of the electrolysis cell (2).

### [Item 4]

The electrolysis system (1) according to any one of Items 1 through 3, wherein
the operating temperature of the mediator reduction tank (4) is adjusted to a temperature higher than the operating temperature of the electrolysis cell (2).

### [Item 5]

The electrolysis system (1) according to any one of Items 1 through 4, wherein
the anode electrode (10) oxidizes the reduced form (M_{Red}) by a reaction that does not involve gas generation.

### [Item 6]

The electrolysis system (1) according to any one of Items 1 through 5, wherein
the electrolysis cell (2) and the mediator reduction tank (4) are physically separated from each other.

### [Item 7]

The electrolysis system (1) according to any one of Items 1 through 6, wherein
the cathode electrode (8) generates the organic hydride.

### [Item 8]

The electrolysis system (1) according to any one of Items 1 through 7, further including:
a power supply (22) that supplies power derived from renewable energy to the electrolysis cell (2).

### [Item 9]

An electrolysis method in which an electrolysis system (1) is used that includes an electrolysis cell (2) and a mediator reduction tank (4) that is connected to the electrolysis cell (2), including:
generating an oxidized form (Mₒₓ) of the mediator by electrochemically oxidizing a reduced form (M_{Red}) of the mediator at an anode electrode (10) of the electrolysis cell (2);
performing at least one of generation of hydrogen by electrochemically reducing protons or water and generation of an organic hydride by electrochemically reducing a hydrogenation target substance at a cathode electrode (8); and
generating the reduced form (M_{Red}) by non-photochemically reducing the oxidized form (M_{Ox}) generated in the electrolysis cell (2) in the mediator reduction tank (4).

### INDUSTRIAL APPLICABILITY

The present invention can be used for an electrolysis system and an electrolysis method.

### REFERENCE SIGNS LIST

1 electrolysis system, 2 electrolysis cell, 4 mediator reduction tank, 8 cathode electrode, 9 cathode catalyst, 10 anode electrode, 11 anode catalyst, 12 electrolyte membrane, 36 mediator reduction catalyst

## Claims

1. An electrolysis system comprising:
an electrolysis cell; and
a mediator reduction tank that is connected to the electrolysis cell, wherein
the electrolysis cell has: an anode electrode that electrochemically oxidizes a reduced form of a mediator; and a cathode electrode that performs at least one of generation of hydrogen by electrochemical reduction of protons or water and generation of an organic hydride by electrochemical reduction of a hydrogenation target substance, and
the mediator reduction tank non-photochemically reduces an oxidized form of the mediator generated in the electrolysis cell.

2. The electrolysis system according to Claim 1, wherein
the mediator reduction tank causes the oxidized form to react with water or hydroxide ions so as to produce the reduced form and oxygen.

3. The electrolysis system according to Claim 1 or Claim 2, wherein
the mediator is composed of a redox couple having an electrode potential that is more noble than an electrode potential at which oxygen is generated at the anode electrode at the operating temperature of the electrolysis cell.

4. The electrolysis system according to Claim 1 or Claim 2, wherein
the operating temperature of the mediator reduction tank is adjusted to a temperature higher than the operating temperature of the electrolysis cell.

5. The electrolysis system according to Claim 1 or Claim 2, wherein
the anode electrode oxidizes the reduced form by a reaction that does not involve gas generation.

6. The electrolysis system according to Claim 1 or Claim 2, wherein
the electrolysis cell and the mediator reduction tank are physically separated from each other.

7. The electrolysis system according to Claim 1 or Claim 2, wherein
the cathode electrode generates the organic hydride.

8. The electrolysis system according to Claim 1 or Claim 2, further comprising:
a power supply that supplies power derived from renewable energy to the electrolysis cell.

9. An electrolysis method in which an electrolysis system is used that includes an electrolysis cell and a mediator reduction tank that is connected to the electrolysis cell, comprising:
generating an oxidized form of the mediator by electrochemically oxidizing a reduced form of the mediator at an anode electrode of the electrolysis cell;
performing at least one of generation of hydrogen by electrochemically reducing protons or water and generation of an organic hydride by electrochemically reducing a hydrogenation target substance at a cathode electrode of the electrolysis cell; and
generating the reduced form by non-photochemically reducing the oxidized form generated in the electrolysis cell in the mediator reduction tank.
